# EUROPÄISCHE PATENTSCHRIFT

(11) **EP 2 559 236 B1**
(45) Veröffentlichungstag und Bekanntmachung des Hinweises auf die Patenterteilung: **28.01.2015**
(21) Anmeldenummer: 11714964.1
(22) Anmeldetag: 11.04.2011
(51) Int. Cl.: H04N 7/18, B60R 1/00, B60R 1/12

(54) **VERFAHREN ZUM ANZEIGEN EINES BILDES AUF EINER ANZEIGEEINRICHTUNG IN EINEM FAHRZEUG, FAHRERASSISTENZSYSTEM UND FAHRZEUG**
METHOD FOR DISPLAYING AN IMAGE ON A DISPLAY DEVICE IN A VEHICLE, DRIVER ASSISTANCE SYSTEM AND VEHICLE
PROCÉDÉ D'AFFICHAGE D'UNE IMAGE SUR UN ÉQUIPEMENT D'AFFICHAGE DANS UN VÉHICULE, SYSTÈME D'ASSISTANCE AU CONDUCTEUR ET VÉHICULE

(30) Priorität: 15.04.2010 DE 102010015079
(43) Veröffentlichungstag der Anmeldung: 20.02.2013
(73) Patentinhaber: Valeo Schalter und Sensoren GmbH, 74321 Bietigheim-Bissingen (DE)
(72) Erfinder: BARTH, Harald, 70825 Korntal-Muenchingen (DE)
(86) Internationale Anmeldenummer: PCT/EP2011/055610
(87) Internationale Veröffentlichungsnummer: WO 2011/141249

(56) Entgegenhaltungen:
- EP-A1- 1 179 958
- US-A1- 2004 260 469

## Beschreibung

Die Erfindung betrifft ein Verfahren zum Anzeigen eines Bildes auf einer Anzeigeeinrichtung in einem Fahrzeug. Es wird ein Fahrzeugbild von zumindest einem Bereich des Fahrzeugs bereitgestellt. Es werden außerdem Sensordaten erfasst, die Informationen über eine Umgebung des Fahrzeugs beinhalten. Es wird ein Bild angezeigt, das aus dem Fahrzeugbild und den Sensordaten gebildet wird. Das Bild beinhaltet eine der Umgebung zugeordnete Blindregion, zu welcher keine Sensordaten vorliegen. Die Erfindung bezieht sich außerdem auf ein Fahrerassistenzsystem, wie auch auf ein Fahrzeug mit einem solchen Fahrerassistenzsystem.

Es ist Stand der Technik, Bilder auf einer Anzeigeeinrichtung eines Fahrzeugs anzuzeigen, welche das Fahrzeug einerseits und seine Umgebung andererseits darstellen. Vorliegend gilt das Interesse insbesondere einer Draufsicht auf das Fahrzeug und seine Umgebung (auch unter der Bezeichnung "bird view" bekannt). Ein Bild, welches eine solche Draufsicht darstellt, kann durch eine Verarbeitung der erfassten Sensordaten erzeugt werden. In der Regel werden dazu Bilddaten einer Vielzahl von Kameras verarbeitet, die an der Karosserie des Fahrzeugs angebracht sind. Auf der Anzeigeeinrichtung wird dann ein Bild angezeigt, welches eine Draufsicht auf das Fahrzeug - ein Fahrzeugbild ist in der Regel bereits vorab abgespeichert - und seine Umgebung zeigt - das Bild der Umgebung wird aus den Sensordaten erzeugt.

Zur Erfassung der Sensordaten können beispielsweise vier Kameras eingesetzt werden: eine Kamera an dem vorderen Stoßfänger, eine an dem hinteren Stoßfänger, eine an der linken und eine an der rechten Seitenflanke des Fahrzeugs. Es existieren dabei Bereiche in der Umgebung des Fahrzeugs, die durch die Kameras nicht erfasst werden können. Insbesondere können die abgerundeten Eckbereiche des Fahrzeugs nicht erfasst werden, wie auch ein sich unmittelbar an die äußere Oberfläche des Fahrzeugs anschließender Nahbereich. Also existieren zu diesen Bereichen keine Sensordaten, und es kann auf der Anzeigeeinrichtung zu diesen Bereichen kein realitätstreues Bild dargestellt werden. Dieser Problematik begegnet man im Stand der Technik dadurch, dass in dem angezeigten Bild diese Blindregionen der Umgebung, zu denen keine Sensordaten vorhanden sind, schwarz dargestellt werden. Der Fahrer bekommt somit zu den Blindregionen überhaupt keine Informationen dargestellt und weiß somit auch nicht, ob sich in diesen Bereichen der Umgebung Objekte befinden oder nicht. Beobachtungen haben ergeben, das der Fahrer in der Regel dazu tendiert, mit seinem Fahrzeug derart zu manövrieren, dass in der Umgebung befindliche Objekte in die Bereiche gelangen, die durch die Kameras nicht erfasst werden können. Solche Objekte werden in dem angezeigten Bild durch schwarze Felder überdeckt und somit nicht dargestellt. Es kann unter Umständen passieren, dass sich der Fahrer bei der Beurteilung des tatsächlichen Abstands zwischen dem Fahrzeug und dem Objekt verschätzt. Deshalb sollte der Fahrer Situationen vermeiden, in denen Objekte in die nicht abgebildeten Bereiche gelangen. Solche Kollisionssituationen - die auf das Verhalten des Fahrers zurückzuführen sind - können jedoch nicht ausgeschlossen werden. Eine besondere Herausforderung besteht somit darin, ein kollisionsfreies Manövrieren des Fahrzeugs zu ermöglichen.

EP1179958 A1 beschreibt ein Verfahren, und ein Fahrerassistenzsystem, zum Anzeigen eines Bildes auf einer Anzeigeeinrichtung in einem Fahrzeug mit dem Merkmale nach dem Oberbegriff des Anspruchs 1 und 9.

Es ist Aufgabe der Erfindung, einen Weg aufzuzeigen, wie bei einem Verfahren der eingangs genannten Gattung das Risiko einer Kollision beim Führen des Fahrzeugs auf ein Minimum reduziert werden kann.

Diese Aufgabe wird erfindungsgemäß durch ein Verfahren mit den Merkmalen des Patentanspruchs 1, wie auch durch ein Fahrerassistenzsystem mit den Merkmalen gemäß Patentanspruch 9 und durch ein Fahrzeug mit den Merkmalen des Patentanspruchs 10 gelöst. Vorteilhafte Ausführungen der Erfindung sind Gegenstand der abhängigen Patentansprüche und der Beschreibung.

Bei einem erfindungsgemäßen Verfahren wird ein Bild auf einer Anzeigeeinrichtung in einem Fahrzeug - insbesondere einem Kraftwagen, vorzugsweise einem Personenkraftwagen - angezeigt. Es wird ein Fahrzeugbild von zumindest einem Bereich des Fahrzeugs bereitgestellt, und es werden Sensordaten erfasst, die Informationen über eine Umgebung des Fahrzeugs beinhalten. Das angezeigte Bild wird aus dem Fahrzeugbild und den Sensordaten gebildet, wobei das Bild eine der Umgebung zugeordnete Blindregion beinhaltet, zu welcher keine Sensordaten vorliegen. In dem angezeigten Bild ragt das Fahrzeugbild in die Blindregion hinein.

Also wird der erfindungsgemäße Effekt dadurch erzielt, dass in dem Bild die Blindregion der Umgebung zumindest bereichsweise durch das Fahrzeugbild überdeckt wird. Mit anderen Worten erstreckt sich das im Bild dargestellte Fahrzeug zumindest bereichsweise über die Blindregion, zu welcher keine Sensordaten vorhanden sind. Anders als im Stand der Technik werden somit die Blindregionen der Umgebung nicht vollständig schwarz dargestellt, sondern das Fahrzeug wird in dem Bild so dargestellt, dass es die Blindregion zumindest bereichsweise überdeckt. Es wird somit dem Fahrer vorgetäuscht, dass der Abstand von in der Umgebung befindlichen Objekten zu dem Fahrzeug kleiner als der tatsächliche Abstand ist. Es wird somit das Risiko einer Kollision auf ein Minimum reduziert. Der Fahrer wird nämlich sein Fahrzeug so führen, dass die im Bild dargestellten Objekte mit dem "verfälscht" dargestellten Fahrzeug nicht kollidieren und somit immer in einem bestimmten Abstand vom Fahrzeug verbleiben. Ein weiterer Vorteil der Erfindung besteht darin, dass auf der Anzeigeeinrichtung ein optisch ansprechendes Bild dargestellt wird, in welchem vorzugsweise keine schwarzen Felder oder lediglich deutlich verkleinerte Felder dargestellt sind.

In dem Bild ragt das Fahrzeugbild vorzugsweise vollständig in die Blindregion hinein. Dies bedeutet, dass die Blindregion vollständig durch das Fahrzeugbild überdeckt wird.

Also ragt in dem dargestellten Bild das Fahrzeugbild in die Blindregion hinein. Dies kann auf verschiedene Art und Weise verwirklicht werden: Zum Beispiel kann das Fahrzeugbild in dem angezeigten Bild verschoben werden, so dass es in die Blindregion hineinragt. Eine weitere Lösung beinhaltet, dass in dem angezeigten Bild das Fahrzeug mit einer gegenüber der Umgebung vergrößerten Skalierung dargestellt wird, so dass die Blindregion zumindest bereichsweise überdeckt wird. Eine noch weitere - zusätzliche oder alternative - Lösung besteht darin, dass in dem Fahrzeugbild zumindest ein Bereich des Fahrzeugs verzerrt dargestellt wird. Bezüglich des Fahrzeugbildes sind unterschiedliche Ausführungsformen vorgesehen: Das veränderte Fahrzeugbild kann bereits vorab in einer Speichereinrichtung abgespeichert werden. Alternativ kann ein realitätstreues Fahrzeugbild vorab abgespeichert werden, und eine Recheneinrichtung kann dieses Fahrzeugbild dann auf eine solche Art und Weise verarbeiten, dass das Fahrzeugbild die Blindregion überdeckt.

Das Fahrzeugbild zeigt vorzugsweise das gesamte Fahrzeug. Somit bekommt der Fahrer auf der Anzeigeeinrichtung das gesamte Fahrzeug angezeigt und kann sich über die Umgebung um das Fahrzeug herum informieren.

Wie bereits ausgeführt, kann in dem Bild zumindest ein Bereich des Fahrzeugs mit einer gegenüber der Umgebung vergrößerten Skalierung dargestellt werden. Dann überdeckt dieser vergrößerte Bereich zumindest bereichsweise die Blindregion. Auf diesem Wege gelingt es, die Blindregion der Umgebung mit dem Fahrzeugbild mit geringstem Datenverarbeitungsaufwand abzudecken. Das Fahrzeugbild muss nämlich lediglich gegenüber der Umgebung entsprechend größer skaliert werden, so dass ein Randbereich des Fahrzeugs in die Blindregion der Umgebung gelangt. Diese Ausführungsform hat des Weiteren den Vorteil, dass die Form und das Aussehen des Fahrzeugs im Bild nicht beeinträchtigt werden muss, das Fahrzeug also realitätsgetreu abgebildet werden kann.

Es erweist sich als besonders vorteilhaft, wenn in dem Bild das gesamte Fahrzeug mit der vergrößerten Skalierung dargestellt wird. Hierdurch kann eine Vielzahl von Blindregionen um das Fahrzeug herum durch das Fahrzeugbild zumindest bereichsweise überdeckt werden, nämlich insbesondere sowohl die neben den Eckbereichen des Fahrzeugs befindlichen Blindregionen als auch gegebenenfalls ein schmaler Bereich entlang der äußeren Oberfläche der Fahrzeugkarosserie. Auch hier ist der Datenverarbeitungsaufwand auf ein Minimum reduziert; das Fahrzeugbild muss lediglich vergrößert skaliert werden, nämlich gegenüber der Umgebung.

Ergänzend oder alternativ kann in dem Fahrzeugbild die Form - nämlich beispielsweise ein Konturverlauf - zumindest eines Bereichs des Fahrzeugs verzerrt - also verfälscht - dargestellt werden. Dann wird durch diesen verzerrten Bereich die Blindregion zumindest bereichsweise überdeckt. Diese Ausführungsform ist beispielsweise dann besonders vorteilhaft, wenn einzelne kleinere Blindregionen durch Bereiche des Fahrzeugs im Bild überdeckt werden sollen. Und zwar kann dann beispielsweise lediglich derjenige Bereich des Fahrzeugs verzerrt bzw. gegenüber einem Realitätsbild verfälscht dargestellt werden, an den unmittelbar die Blindregion der Umgebung angrenzt. Dies sind in der Regel Eckbereiche des Fahrzeugs. Tritt eine Blindregion der Umgebung neben einen Eckbereich des Fahrzeugs auf, so kann der Eckbereich entsprechend verzerrt dargestellt werden. Dies kann beispielsweise so aussehen, dass dieser Eckbereich im Bild ausgedehnt beziehungsweise vergrößert wird, so dass die Blindregion durch diesen Bereich überdeckt wird. Diese Ausführungsform bietet also die Möglichkeit, mit einem geringen technischen Aufwand einzelne Blindregionen der Umgebung neben dem Fahrzeug durch entsprechende benachbarte Bereiche des Fahrzeugs zu überdecken. Es kann auch vorgesehen sein, dass in dem Bild das Fahrzeug zunächst mit einer vergrößerten Skalierung gegenüber der Umgebung dargestellt wird und dann zusätzlich zumindest ein Bereich des Fahrzeugs verzerrt dargestellt wird. Durch eine solche Kombination kann einerseits eine um das Fahrzeug herum liegende schmalere Blindregion überdeckt werden - nämlich durch die vergrößerte Skalierung des Fahrzeugs; andererseits können somit weitere, neben den Eckbereichen des Fahrzeugs befindliche Blindregionen überdeckt werden - nämlich durch entsprechende Verzerrung der Eckbereiche im Bild. Auf diesem Wege gelingt es insbesondere, alle Blindregionen durch das Fahrzeugbild vollständig zu überdecken, so dass in dem angezeigten Bild lediglich das Fahrzeug und seine Umgebung dargestellt werden können.

Die Vorteile der Erfindung kommen insbesondere dann vollständig zum Tragen, wenn das Fahrzeugbild eine Draufsicht auf den zumindest einen Bereich des Fahrzeugs - insbesondere auf das gesamte Fahrzeug - darstellt und die Sensordaten zu Bilddaten verarbeitet werden, die eine Darstellung einer Draufsicht auf die erfasste Umgebung repräsentieren. Dann wird in dem Bild die Draufsicht auf den zumindest einen Bereich des Fahrzeugs, wie auch auf die Umgebung dargestellt. Eine solche Draufsicht auf das Fahrzeug und die Umgebung ist besonders benutzerfreundlich: Der Fahrer kann somit besonders einfach auf die Abstände zwischen dem Fahrzeug und den in der Umgebung befindlichen Objekten zurückschließen beziehungsweise eine kritische Situation erkennen. Also kann der Fahrer bei einer derartigen Vogelperspektive die jeweiligen Abstände zwischen dem Fahrzeug und jeglichen Gegenständen besser beurteilen. Gerade dann stellt sich jedoch das Problem der Blindregionen der Umgebung; zu einigen Bereichen der Umgebung, die sich unmittelbar an das Fahrzeug anschließen, fehlen nämlich die Sensordaten. Gerade dieser Problematik begegnet die vorliegende Erfindung, indem die Blindregionen in dem angezeigten Bild durch das Fahrzeugbild zumindest bereichsweise überdeckt werden.

In einer Ausführungsform wird für die Blindregion ein Extrapolationsbild durch eine Extrapolation der Sensordaten gewonnen, und in dem angezeigten Bild wird die Blindregion bereichsweise durch das Extrapolationsbild überdeckt. Somit können für die Blindregion auch zusätzliche Daten aus den Sensordaten gewonnen werden, nämlich mithilfe einer Extrapolation. Hierdurch kann ein Bereich der Blindregion mit "künstlichen" Daten - und nicht wie im Stand der Technik mit schwarzen Feldern - bereichsweise überdeckt werden. Dies kann beispielsweise so aussehen, dass ein Bereich der Blindregion mit einem Extrapolationsbild überdeckt wird, dessen Farbgebung der Farbgebung des benachbarten Bereichs der erfassten Umgebung entspricht. Also kann ein Bereich der Blindregion durch das Fahrzeugbild überdeckt werden, während ein weiterer Bereich der Blindregion mit dem Extrapolationsbild überdeckt wird. Es wird mit dem Extrapolationsbild vorzugsweise die Überdeckung der Blindregion vervollständigt, das heißt mit dem Extrapolationsbild wird derjenige Bereich der Blindregion überdeckt, welcher nicht durch das Fahrzeugbild überdeckt wird. Es gelingt somit, die vollständige Blindregion mit Bildern zu überdecken, so dass auf der Anzeigeeinrichtung insgesamt ein optisch ansprechendes Bild dargestellt werden kann, nämlich insbesondere ohne schwarze Bereiche und ohne, dass das Risiko einer Kollision erhöht wird.

Die Sensordaten werden bevorzugt mithilfe zumindest einer Kamera erfasst, also insbesondere mithilfe einer optischen Erfassungseinrichtung, die Licht in dem vom Menschen sichtbaren Spektralbereich detektieren kann. Es können beispielsweise insgesamt zumindest vier Kameras bereitgestellt sein, die an dem Fahrzeug angebracht sind. Eine erste Kamera kann beispielsweise an einem vorderen Stoßfänger angebracht sein, eine zweite Kamera an einem hinteren Stoßfänger, eine dritte Kamera an der linken Seitenflanke oder einem linken Außenspiegel, und eine vierte Kamera an der rechten Seitenflanke oder einem rechten Außenspiegel. Die Kameras können einen relativ breiten Erfassungswinkel aufweisen, nämlich insbesondere einen Erfassungswinkel größer als 170°, insbesondere größer als 180°. Somit kann die gesamte Umgebung des Fahrzeugs erfasst werden, und es kann ein Bild erzeugt werden, das eine Draufsicht auf die Umgebung des Fahrzeugs zeigt.

Ein erfindungsgemäßes Fahrerassistenzsystem für ein Fahrzeug ist zum Anzeigen von Bildern ausgebildet. Es umfasst zumindest einen Sensor, der zum Erfassen von Sensordaten dient, die Informationen über eine Umgebung des Fahrzeugs beinhalten. Das Fahrerassistenzsystem umfasst außerdem eine Recheneinrichtung, in welcher ein Fahrzeugbild von zumindest einem Bereich des Fahrzeugs bereitgestellt ist. Die Recheneinrichtung kann aus dem Fahrzeugbild und den Sensordaten ein Bild erzeugen. Dieses Bild beinhaltet eine der Umgebung zugeordnete Blindregion, zu welcher keine Sensordaten vorliegen. Das Fahrerassistenzsystem umfasst außerdem eine Anzeigeeinrichtung, welche zum Anzeigen des Bildes dient. In dem angezeigten Bild ragt das Fahrzeugbild in die Blindregion hinein.

Ein erfindungsgemäßes Fahrzeug, insbesondere ein Kraftwagen, umfasst ein erfindungsgemäßes Fahrerassistenzsystem. Die mit Bezug auf das erfindungsgemäße Verfahren vorgestellten bevorzugten Ausführungsformen und deren Vorteile gelten entsprechend für das erfindungsgemäße Fahrerassistenzsystem, wie auch für das erfindungsgemäße Fahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die in der Figurenbeschreibung genannten und/oder in den Figuren alleine gezeigten Merkmale und Merkmalskombinationen sind nicht nur in der jeweils angegebenen Kombination, sondern auch in anderen Kombinationen oder auch in Alleinstellung verwendbar.

Die Erfindung wird nun anhand einzelner bevorzugter Ausführungsbeispiele, wie auch unter Bezugnahme auf die beigefügten Zeichnungen näher erläutert.

Es zeigen:
- Fig. 1: in schematischer Darstellung ein Fahrzeug mit einem Fahrerassistenzsystem gemäß einer Ausführungsform der Erfindung;
- Fig. 2: in schematischer Darstellung ein Bild, in welchem Blindregionen einer Umgebung des Fahrzeugs gezeigt sind;
- Fig. 3: in schematischer Darstellung ein durch das Fahrerassistenzsystem angezeigtes Bild, wobei Blindregionen durch ein Fahrzeugbild überdeckt sind;
- Fig. 4: in schematischer Darstellung ein Bild, in welchem Eckbereiche des Fahrzeugs verzerrt dargestellt sind und Blindregionen der Umgebung überdecken; und
- Fig. 5: in schematischer Darstellung ein Bild, in welchem Blindregionen durch ein Extrapolationsbild überdeckt sind.

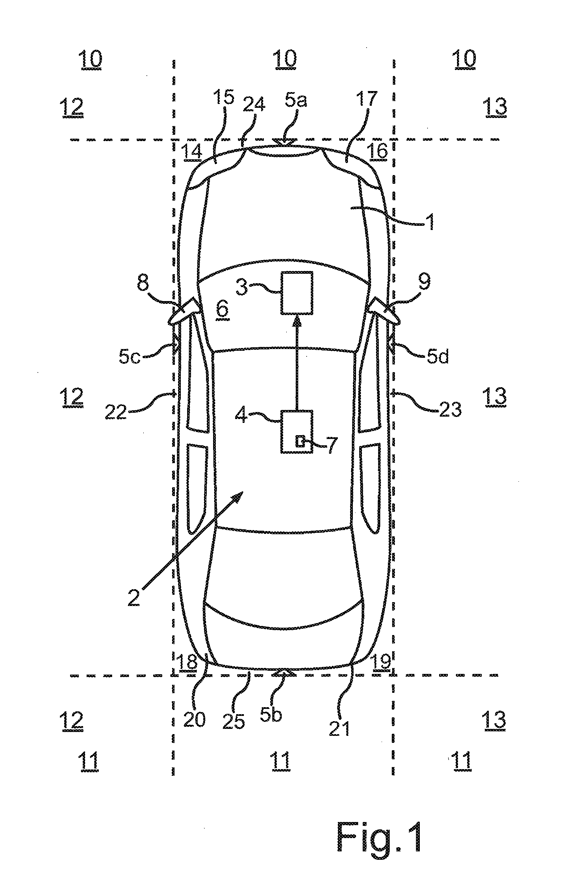

Ein Fahrzeug 1, wie es in Fig. 1 dargestellt ist, ist ein Personenkraftwagen. Das Fahrzeug 1 umfasst ein Fahrerassistenzsystem 2, welches folgende Komponenten beinhaltet: eine Anzeigeeinrichtung 3, eine Recheneinrichtung 4, wie auch vier Kameras 5a bis 5d. Die Recheneinrichtung 4 steuert die Anzeigeeinrichtung 3. Die Kameras 5a bis 5d übermitteln erfasste Sensordaten an die Recheneinrichtung 4, nämlich beispielsweise über einen internen Kommunikationsbus des Fahrzeugs 1.

Die Anzeigeeinrichtung 3 kann beispielsweise ein LCD-Display sein. Sie kann aber auch ein Projektor sein, mit dessen Hilfe Bilder auf eine Windschutzscheibe 6 projiziert werden können (ein so genannter head-up-display).

In der Recheneinrichtung 4 ist außerdem ein Fahrzeugbild abgespeichert - und genauer gesagt Daten, die ein Bild von dem Fahrzeug 1 repräsentieren -, nämlich in einem Speicher 7.

Die Kameras 5a bis 5d sind an einer äußeren Oberfläche des Fahrzeugs 1 angeordnet. Die Anzahl sowie die Anordnung der Kameras 5a bis 5d ist in Fig. 1 lediglich beispielhaft dargestellt; je nach Ausführungsform kann die Anzahl der Kameras 5a bis 5d sowie deren Anordnung an dem Fahrzeug 1 variieren. Im Ausführungsbeispiel ist eine erste Kamera 5a an einem vorderen Stoßfänger des Fahrzeugs 1 angeordnet, während eine zweite Kamera 5b an einem hinteren Stoßfänger angeordnet ist. Eine dritte Kamera 5c ist an der linken Seitenflanke angebracht; sie kann auch in einen linken Außenspiegel 8 integriert sein. Eine vierte Kamera 5d ist an der rechten Seitenflanke angebracht, nämlich im Bereich eines rechten Außenspiegels 9. Auch die vierte Kamera 5d kann in den Außenspiegel 9 integriert sein.

Die Kameras 5a bis 5d weisen jeweils einen breiten Erfassungswinkel auf und sind somit so genannte Fischaugenkameras. Zum Beispiel kann der jeweilige Erfassungswinkel in einem Wertebereich von 170° bis 190° liegen. Wie aus Fig. 1 hervorgeht, erfasst die erste Kamera 5a einen Bereich 10 vor dem Fahrzeug 1, während die zweite Kamera 12b einen Bereich 11 hinter dem Fahrzeug 1 erfasst. Entsprechend erfasst die dritte Kamera 5c einen Bereich 12 links neben dem Fahrzeug 1; die vierte Kamera 5d erfasst einen Bereich 13 rechts neben dem Fahrzeug 1. Die Kameras 5a bis 5d können also im Wesentlichen die gesamte Umgebung des Fahrzeugs 1 erfassen. Jedoch existieren in der Umgebung des Fahrzeugs 1 Regionen, die durch die Kameras 5a bis 5d nicht erfasst werden können. Und zwar kann eine erste Blindregion 14 neben einem Eckbereich 15 des Fahrzeugs 1 durch die Kameras 5a bis 5d nicht erfasst werden; außerdem kann durch die Kameras 5a bis 5d eine zweite Blindregion 16 nicht erfasst werden, die sich neben einem vorderen rechten Eckbereich 17 des Fahrzeugs 1 befindet. Es existieren außerdem Blindregionen 18, 19 neben einem hinteren linken Eckbereich 20 respektive einem hinteren rechten Eckbereich 21 des Fahrzeugs 1. Es gibt außerdem weitere Blindregionen der Umgebung: eine sich an die linke Seitenflanke unmittelbar anschließende Blindregion 22, eine sich an die rechte Seitenflanke unmittelbar anschließende Blindregion 23, wie auch eine sich an den vorderen Stoßfänger unmittelbar anschließende Blindregion 24 und eine sich an den hinteren Stoßfänger unmittelbar anschließende Blindregion 25. Die Blindregionen 22 bis 25 sind relativ flach und erstrecken sich im Wesentlichen vertikal parallel zur äußeren Oberfläche des Fahrzeugs 1. Diese Blindregionen 22 bis 25 können gegebenenfalls durch eine entsprechende Anordnung der Kameras 5a bis 5d und/oder durch entsprechende Auswahl des Erfassungswinkels eliminiert werden.

Die Recheneinrichtung 4 kann die durch die Kameras 5a bis 5d erfassten Sensordaten verarbeiten. Wie bereits ausgeführt, existieren die Sensordaten zu den Erfassungsbereichen 10 bis 13, während zu den Blindregionen 14 bis 25 keine Sensordaten vorliegen. Die Recheneinrichtung 4 kann die Sensordaten zu Bilddaten verarbeiten, die eine Darstellung einer Draufsicht auf die Umgebung des Fahrzeugs 1, nämlich auf die Erfassungsbereiche 10 bis 13, repräsentieren. Die Recheneinrichtung 4 kann also aus den Sensordaten ein Umgebungsbild erzeugen, welches eine Draufsicht auf die Erfassungsbereiche 10 bis 13 zeigt.

Wie bereits ausgeführt, ist in dem Speicher 7 ein Fahrzeugbild von dem Fahrzeug 1 abgespeichert. Auch dieses Fahrzeugbild zeigt das Fahrzeug 1 aus einer Vogelperspektive; das Fahrzeugbild zeigt mit anderen Worten eine Draufsicht auf das Fahrzeug 1. Die Recheneinrichtung 4 kann ein Bild aus dem Umgebungsbild und dem Fahrzeugbild erzeugen, so dass in einem einzigen Bild sowohl die Umgebung des Fahrzeugs 1 als auch das Fahrzeug 1 selbst aus einer Vogelperspektive dargestellt werden. Dieses Bild kann die Recheneinrichtung 4 auf der Anzeigeeinrichtung 3 anzeigen. Das so erzeugte Bild wird auf der Anzeigeeinrichtung 3 kontinuierlich angezeigt. Dies bedeutet, dass sich das Bild kontinuierlich an die Umgebung des Fahrzeugs 1 anpasst. Die Sensordaten werden nämlich kontinuierlich durch die Kameras 5a bis 5d erfasst.

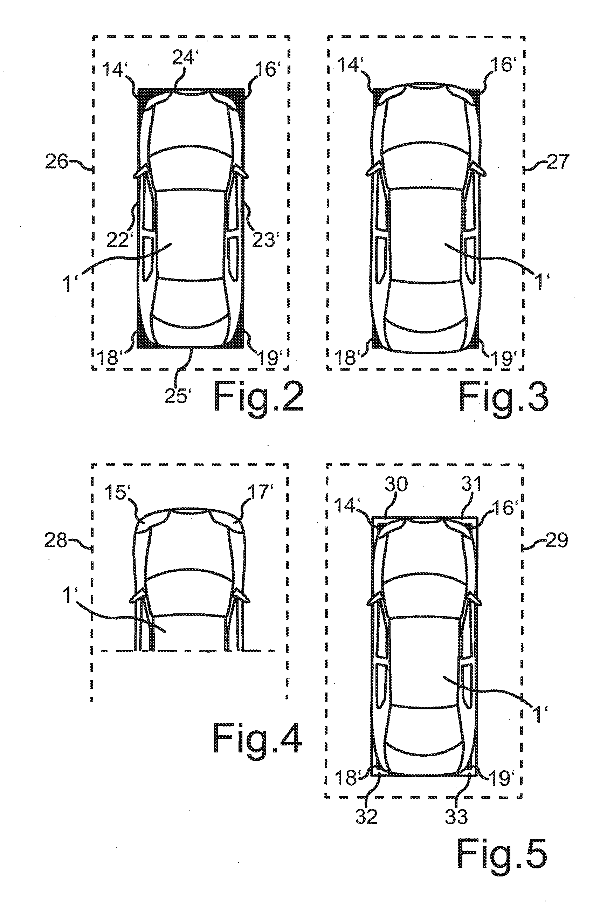

Ein mögliches Bild 26, welches durch die Recheneinrichtung 4 aus den Sensordaten und dem Fahrzeugbild erzeugt werden kann, ist in Fig. 2 dargestellt. Dieses Bild zeigt das Fahrzeugbild 1', wie auch die Umgebung des Fahrzeugs 1. Wie aus Fig. 2 hervorgeht, beinhaltet das Bild 26 der Umgebung zugeordnete Blindregionen 14', 16', 18', 19', wie auch Blindregionen 22' bis 25'. Zu diesen Blindregionen 14', 16', 18', 19' und 22' bis 25' existieren keine Sensordaten. Im Stand der Technik werden diese Blindregionen schwarz dargestellt, so dass der Fahrer das in Fig. 2 gezeigte Bild 26 angezeigt bekommt. Dies kann zu solchen Situationen führen, dass der Fahrer das Fahrzeug 1 auf eine solche Art und Weise manövriert, dass in dem Bild 26 zunächst abgebildete Objekte in die Blindregionen 14', 16', 18', 19' und 22' bis 25' gelangen. Der Fahrer kann dann diese Objekte nicht mehr sehen und sollte das Fahrzeug 1 in einer solchen Situation sofort abbremsen beziehungsweise eine solche Situation überhaupt nicht zulassen.

Um solche Situationen auszuschließen, wird im vorliegenden Ausführungsbeispiel ein solches Bild auf der Anzeigeeinrichtung 3 angezeigt, in welchem das Fahrzeugbild 1' in die Blindregionen 14', 16', 18', 19' und 22' bis 25' hineinragt. Ein Beispiel für ein solches Bild 27 ist in Fig. 3 dargestellt. In diesem Bild 27 wird das Fahrzeug 1' mit einer vergrößerten Skalierung dargestellt, nämlich gegenüber der Umgebung. Dies kann beispielsweise so erfolgen, dass in dem Speicher 7 bereits ein vergrößertes Fahrzeugbild 1' abgelegt ist; alternativ kann die Recheneinrichtung 4 durch eine Bildverarbeitung die Skalierung des Fahrzeugsbildes 1' quasi in Echtzeit entsprechend vergrößern. Also zeigt das Fahrzeugbild 1' in dem Bild 27 das Fahrzeug 1, dessen Abmessungen gegenüber der Umgebung vergrößert sind. In dem Bild 27 werden somit durch das Fahrzeugbild 1' nicht nur die Blindregionen 22' bis 25' vollständig überdeckt, sondern teilweise auch die Blindregionen 14', 16', 18' und 19'. Der Fahrer bekommt somit ein Bild 27 angezeigt, wie es in Fig. 3 dargestellt ist. Wie aus Fig. 3 hervorgeht, sind im bild 27 alle Blindregionen 14', 16', 18', 19' und 22' bis 25' fast vollständig überdeckt; lediglich sind die Blindregionen 14', 16', 18', 19' teilweise noch sichtbar. Das Bild 27 hat gegenüber dem Bild 26 den Vorteil, dass der Fahrer insgesamt kleinere Abstände zwischen dem Fahrzeug 1' und Objekten in der Umgebung als die tatsächlichen Abstände wahrnimmt. Durch das Bild 27 wird dem Fahrer die Möglichkeit eingeschränkt, Objekte in die Blindregionen 14', 16', 18', 19' gelangen zu lassen, so dass auch das Risiko einer Kollision auf ein Minimum Reduziert ist.

Ein weiterer Schritt der Bildverarbeitung oder eine alternative Ausführungsform kann darin bestehen, dass in dem angezeigten Bild zumindest ein Bereich des Fahrzeugs 1' verfälscht beziehungsweise verzerrt dargestellt wird. Fig. 4 zeigt einen Ausschnitt eines weiteren Bildes 28, wie es durch die Recheneinrichtung 4 erzeugt wird. In dem Bild 28 ist ebenfalls das Fahrzeugbild 1' dargestellt, wie auch die Umgebung aus einer Vogelperspektive. Wie aus Fig. 4 hervorgeht, sind die Blindregionen 14' und 16' vollständig durch das Fahrzeugbild 1' überdeckt. Hierzu sind die Eckbereiche 15', 17' des Fahrzeugs 1' verzerrt dargestellt. Und zwar sind diese Eckbereiche 15', 17' im Vergleich zum Bild 27 gemäß Fig. 3 ausgedehnt und vergrößert, so dass sie sich vollständig über die Blindregionen 14', 16' erstrecken. Mit anderen Worten sind die Eckbereiche 15', 17' weniger abgerundet und somit eckiger als die Eckbereiche im Bild 27 gemäß Fig. 3 bzw. die tatsächlichen Eckbereiche 15, 17 des Fahrzeugs 1. Entsprechend können auch die hinteren Eckbereiche des Fahrzeugbildes 1' verzerrt dargestellt werden, so dass die Blindregionen 18', 19' vollständig überdeckt werden. Wie bereits ausgeführt, kann die Verzerrung zumindest eines Bereichs des Fahrzeugbildes 1' mit der Vergrößerung der Skalierung des Fahrzeugbildes 1' kombiniert werden. Jedoch kann auch die Verzerrung alternativ zur Vergrößerung der Skalierung erfolgen.

Ein solches verzerrtes Bild des Fahrzeugs kann entweder durch eine Bildverarbeitung eines Fahrzeugsbildes durch die Recheneinrichtung 4 gewonnen werden oder es kann bereits vorab in dem Speicher 7 abgelegt werden.

In Fig. 5 ist ein weiteres Beispiel für ein Bild 29 dargestellt, in welchem die Blindregionen 14', 16', 18' und 19' im Vergleich zum Bild 26 gemäß Fig. 2 reduziert sind. In diesem Bild 29 ist das Fahrzeugbild 1' in derselben Skalierung gezeigt, wie im Bild 26 gemäß Fig. 2. Dies bedeutet, dass diese Skalierung der Skalierung der Umgebung entspricht. Das Fahrzeugbild 1' kann jedoch im Bild 29 gemäß Fig. 5 auch mit einer vergrößerten Skalierung dargestellt werden. Im Bild 29 gemäß Fig. 5 sind die Blindregionen 14', 16', 18', 19' teilweise durch Interpolationsbilder 30, 31, 32, 33 überdeckt. Diese Interpolationsbilder 30 bis 33 werden durch die Recheneinrichtung 4 durch eine Extrapolation der Sensordaten gewonnen. Anders als im Stand der Technik werden somit die Blindregionen 14', 16', 18', 19' nicht durch schwarze Felder überdeckt, sondern durch Bilder, die aus den Sensordaten gewonnen werden. Dies ist besonders benutzerfreundlich; dem Fahrer wird der Eindruck vermittelt, dass quasi die vollständige Umgebung des Fahrzeugs 1 abgebildet wird.

## Patentansprüche

1. Verfahren zum Anzeigen eines Bildes (27, 28, 29) auf einer Anzeigeeinrichtung (3) in einem Fahrzeug (1), mit den Schritten:
- Bereitstellen eines Fahrzeugbildes (1') von zumindest einem Bereich des Fahrzeugs (1),
- Erfassen von Sensordaten, die Informationen über eine Umgebung des Fahrzeugs (1) beinhalten, und
- Anzeigen eines Bildes (27, 28, 29), das aus dem Fahrzeugbild (1') und den Sensordaten gebildet wird, wobei das Bild (27, 28, 29) eine der Umgebung zugeordnete Blindregion (14', 16', 18', 19', 22' bis 25') beinhaltet, zu welcher keine Sensordaten vorliegen,
**dadurch gekennzeichnet, dass**
in dem Bild (27, 28, 29) das Fahrzeugbild (1') in die Blindregion (14', 16', 18', 19', 22' bis 25') hineinragt.

2. Verfahren nach Anspruch 1,
**dadurch gekennzeichnet, dass**
das Fahrzeugbild (1') das gesamte Fahrzeug (1) zeigt.

3. Verfahren nach Anspruch 1 oder 2,
**dadurch gekennzeichnet, dass**
in dem Bild (27, 28, 29) zumindest ein Bereich des Fahrzeugs (1) mit einer gegenüber der Umgebung vergrößerten Skalierung dargestellt wird und dieser vergrößerte Bereich die Blindregion (14', 16', 18', 19', 22' bis 25') zumindest bereichsweise überdeckt.

4. Verfahren nach Anspruch 3,
**dadurch gekennzeichnet, dass**
in dem Bild (27, 28, 29) das gesamte Fahrzeug (1) mit der vergrößerten Skalierung dargestellt wird.

5. Verfahren nach einem der vorhergehenden Ansprüche,
**dadurch gekennzeichnet, dass**
in dem Fahrzeugbild (1') die Form zumindest eines Bereichs (15', 17') des Fahrzeugs (1) verzerrt dargestellt wird und durch diesen verzerrten Bereich (15', 17') die Blindregion (14', 16', 18', 19', 22' bis 25') zumindest bereichsweise überdeckt wird.

6. Verfahren nach einem der vorhergehenden Ansprüche,
**dadurch gekennzeichnet, dass**
das Fahrzeugbild (1') eine Draufsicht auf den zumindest einen Bereich des Fahrzeugs (1) darstellt und die Sensordaten zu Bilddaten verarbeitet werden, die eine Darstellung einer Draufsicht auf die erfasste Umgebung repräsentieren, wobei in dem Bild (27, 28, 29) die Draufsicht auf den zumindest einen Bereich des Fahrzeugs (1) und auf die Umgebung dargestellt wird.

7. Verfahren nach einem der vorhergehenden Ansprüche,
**dadurch gekennzeichnet, dass**
für die Blindregion (14', 16', 18', 19', 22' bis 25') ein Extrapolationsbild (30 bis 33) durch eine Extrapolation der Sensordaten gewonnen wird und in dem angezeigten Bild (27, 28, 29) die Blindregion (14', 16', 18', 19', 22' bis 25') bereichsweise durch das Extrapolationsbild (30 bis 33) überdeckt wird.

8. Verfahren nach einem der vorhergehenden Ansprüche,
**dadurch gekennzeichnet, dass**
die Sensordaten durch eine Kamera (5a bis 5d) erfasst werden.

9. Fahrerassistenzsystem (2) zum Anzeigen von Bildern (27, 28, 29), für ein Fahrzeug (1), mit:
- zumindest einem Sensor (5a bis 5d) zum Erfassen von Sensordaten, die Informationen über eine Umgebung des Fahrzeugs (1) beinhalten,
- einer Recheneinrichtung (4), in welcher ein Fahrzeugbild (1') von zumindest einem Bereich des Fahrzeugs (1) bereitgestellt ist und die dazu ausgelegt ist, aus dem Fahrzeugbild (1') und den Sensordaten ein Bild (27, 28, 29) zu erzeugen, welches eine der Umgebung zugeordnete Blindregion (14', 16', 18', 19', 22' bis 25') beinhaltet, zu welcher keine Sensordaten vorliegen, und
- einer Anzeigeeinrichtung (3) zum Anzeigen des Bildes (27, 28, 29),
**dadurch gekennzeichnet, dass**
in dem Bild (27, 28, 29) das Fahrzeugbild (1') in die Blindregion (14', 16', 18', 19', 22' bis 25') hineinragt.

10. Fahrzeug (1), insbesondere Kraftwagen, mit einem Fahrerassistenzsystem (2) nach Anspruch 9.

## Claims

1. Method for displaying an image (27, 28, 29) on a display unit (3) in a vehicle (1), having the following steps:
- providing a vehicle image (1') of at least one region of the vehicle (1),
- acquiring sensor data, which contain information about an environment of the vehicle (1), and
- displaying an image (27, 28, 29), which is formed from the vehicle image (1') and the sensor data, the image (27, 28, 29) containing a blank region (14', 16', 18', 19', 22' to 25') assigned to the environment, for which no sensor data are provided,
**characterized in that**
in the image (27, 28, 29), the vehicle image (1') protrudes into the blank region (14', 16', 18', 19', 22' to 25').

2. Method according to Claim 1,
**characterized in that**
the vehicle image (1') shows the entire vehicle (1).

3. Method according to Claim 1 or 2,
**characterized in that**
in the image (27, 28, 29), at least one region of the vehicle (1) is represented having an enlarged scale in relation to the environment and this enlarged region at least regionally overlays the blank region (14', 16', 18', 19', 22' to 25').

4. Method according to Claim 3,
**characterized in that**
the entire vehicle (1) is represented having the enlarged scale in the image (27, 28, 29).

5. Method according to any one of the preceding claims,
**characterized in that**
in the vehicle image (1'), the shape of at least one region (15', 17') of the vehicle (1) is represented as distorted and the blank region (14', 16', 18', 19', 22' to 25') is at least regionally overlaid by this distorted region (15', 17').

6. Method according to any one of the preceding claims,
**characterized in that**
the vehicle image (1') represents a top view of the at least one region of the vehicle (1) and the sensor data are processed into image data, which represent a representation of a top view of the acquired environment, the top view of the at least one region of the vehicle (1) and of the environment being represented in the image (27, 28, 29).

7. Method according to any one of the preceding claims,
**characterized in that**
an extrapolation image (30 to 33) is obtained for the blank region (14', 16', 18', 19', 22' to 25') by an extrapolation of the sensor data and the blank region (14', 16', 18', 19', 22' to 25') is regionally overlaid by the extrapolation image (30 to 33) in the displayed image (27, 28, 29).

8. Method according to any one of the preceding claims,
**characterized in that**
the sensor data are acquired by a camera (5a to 5d).

9. Driver assistance system (2) for displaying images (27, 28, 29) for a vehicle (1) having:
- at least one sensor (5a to 5d) for acquiring sensor data, which contain information about an environment of the vehicle (1),
- a computer unit (4), in which a vehicle image (1') of at least one region of the vehicle (1) is provided and which is designed for the purpose of generating an image (27, 28, 29) from the vehicle image (1') and the sensor data, which image contains a blank region (14', 16', 18', 19', 22' to 25') assigned to the environment, for which no sensor data are provided, and
- a display unit (3) for displaying the image (27, 28, 29),
**characterized in that**
in the image (27, 28, 29), the vehicle image (1') protrudes into the blank region (14', 16', 18', 19', 22' to 25').

10. Vehicle (1), in particular automobile, having a driver assistance system (2) according to Claim 9.

## Revendications

1. Procédé d'affichage d'une image (27, 28, 29) sur un équipement d'affichage (3) contenu dans un véhicule (1), avec les étapes suivantes :
- mise à disposition d'une image de véhicule (1') d'au moins une zone du véhicule (1) ;
- détection de données de capteur contenant les informations sur un environnement du véhicule (1) ; et
- affichage d'une image (27, 28, 29) formée à partir de l'image de véhicule (1') et des données de capteur, l'image (27, 28, 29) contenant la région d'angle mort (14', 16', 18', 19', 22' à 25') associée à l'environnement et pour laquelle on ne dispose d'aucune donnée de capteur ;
**caractérisé en ce que** :
sur l'image (27, 28, 29), l'image de véhicule (1') rentre dans la région d'angle mort (14', 16', 18', 19', 22' à 25').

2. Procédé selon la revendication 1, **caractérisé en ce que** l'image de véhicule (1') représente la totalité du véhicule (1).

3. Procédé selon la revendication 1 ou 2, **caractérisé en ce que** sur l'image (27, 28, 29), au moins une zone du véhicule (1) est représentée avec un échelonnement agrandi par rapport à l'environnement et que cette zone agrandie recouvre au moins en partie la région d'angle mort (14', 16', 18', 19', 22' à 25').

4. Procédé selon la revendication 3, **caractérisé en ce que** sur l'image (27, 28, 29), la totalité du véhicule (1) est représentée avec l'échelonnement agrandi.

5. Procédé selon l'une quelconque des revendications précédentes, **caractérisé en ce que** sur l'image de véhicule (1'), la forme d'au moins une zone (15', 17') du véhicule (1) est représentée de façon déformée et que cette zone (15', 17') déformée permet de couvrir au moins en partie la région d'angle mort (14', 16', 18', 19', 22' à 25').

6. Procédé selon l'une quelconque des revendications précédentes, **caractérisé en ce que** l'image de véhicule (1') représente une vue en élévation sur l'au moins une zone du véhicule (1) et que les données de capteur sont traitées comme des données d'image représentant une représentation d'une vue en élévation sur l'environnement détecté, la vue en élévation sur l'au moins une zone du véhicule (1) et sur l'environnement étant représentée sur l'image (27, 28, 29).

7. Procédé selon l'une quelconque des revendications précédentes, **caractérisé en ce que** pour la région d'angle mort (14', 16', 18', 19', 22' à 25'), on acquiert une image extrapolée (30 à 33) par extrapolation des données de capteur et que sur l'image (27, 28, 29) affichée, la région d'angle mort (14', 16', 18', 19', 22' à 25') est en partie recouverte par l'image extrapolée (30 à 33).

8. Procédé selon l'une quelconque des revendications précédentes, **caractérisé en ce que** les données de capteur sont détectées par une caméra (5a à 5d).

9. Système d'assistance au conducteur (2) servant à l'affichage d'images (27, 28, 29), pour un véhicule (1), avec :
au moins un capteur (5a à 5d) servant à la détection de données de capteur contenant des informations sur un environnement du véhicule (1) ;
un équipement de calcul (4) dans lequel une image de véhicule (1') d'au moins une zone du véhicule (1) est mise à disposition et conçue pour produire, à partir de l'image de véhicule (1') et des données de capteur, une image (27, 28, 29) contenant la région d'angle mort (14', 16', 18', 19', 22' à 25') associée à l'environnement et pour laquelle on ne dispose d'aucune donnée de capteur ; et
un équipement d'affichage (3) servant à l'affichage de l'image (27, 28, 29) ;
**caractérisé en ce que** :
sur l'image (27, 28, 29), l'image de véhicule (1') rentre dans la région d'angle mort (14', 16', 18', 19', 22' à 25').

10. Véhicule (1), notamment véhicule automobile, doté d'un système d'assistance au conducteur (2) selon la revendication 9.
